# EUROPEAN PATENT SPECIFICATION

(11) **EP 2 586 669 B1**
(45) Date of publication and mention of the grant of the patent: **08.01.2014**
(21) Application number: 13000403.9
(22) Date of filing: 16.10.2009
(51) Int. Cl.: B60T 8/26, B60T 8/32, B62L 3/08

(54) **Braking system for motorcycle**
Bremssystem für ein Motorrad
Système de freinage pour motocyclette

(43) Date of publication of application: 01.05.2013
(62) Divisional of application: 09173231.3
(73) Proprietor: Yamaha Hatsudoki Kabushiki Kaisha, Shizuoka-ken Shizuoka 438-8501 (JP); Continental Automotive Corporation, Yokohama-city Kanagawa 221-0031 (JP); Continental Teves AG & Co. oHG, 60488 Frankfurt am Main (DE)
(72) Inventor: Seto, Hiroaki, Iwata-shi Shizuoka-ken, 438-8501 (JP); Oohashi, Kunihide, Iwata-shi Shizuoka-ken, 438-8501 (JP); Kusano, Taishi, Asahi-city Chiba, 289-2505 (JP); Uchida, Takanori, Yokohama-city Kanagawa, 221-0031 (JP); Kremer, Michael, 64846 Groß-Zimmern (DE); Meixner, Michael, 60320 Frankfurt am Main (DE)
(74) Representative: Grünecker, Kinkeldey, Stockmair & Schwanhäusser

(56) References cited:
- EP-A2- 1 277 635
- WO-A1-2008/090783
- JP-A- 2000 006 779
- JP-A- 2000 071 963
- US-A1- 2006 082 216

## Description

The present invention relates to a braking system for motorcycle according to the preamble of independent claim 1. Such a braking system for motorcycle can be taken from the prior art document EP 1 277 635 A2.

As a braking system for a motorcycle, there has been conventionally proposed a braking system including two braking mechanisms and an association mechanism which drives one of the braking mechanisms when the other braking mechanism is operated. The following Japanese Patent Application Laid-Open No. 2000-6779 discloses one example of the braking system having the two braking mechanisms and the association mechanism.

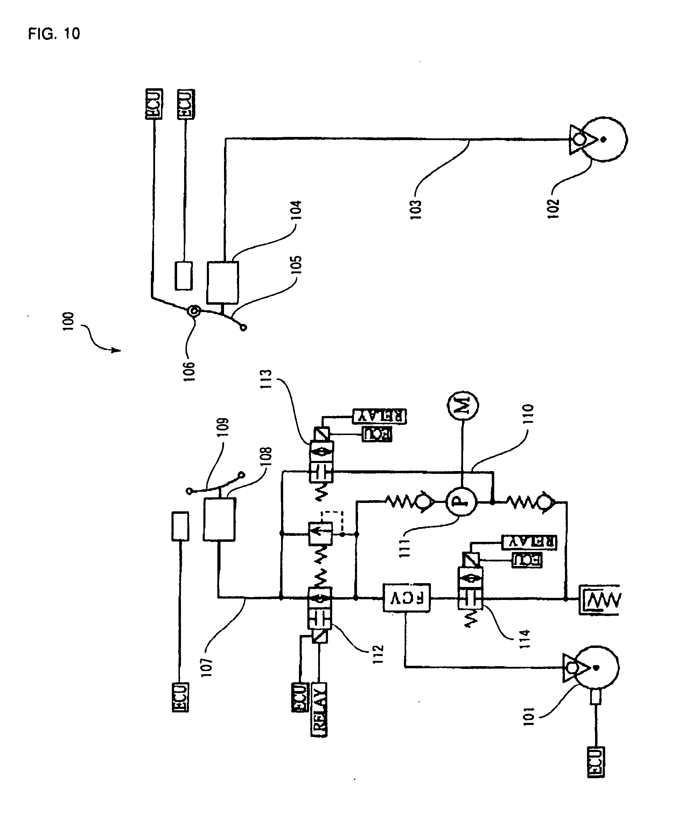

Fig. 10 is a brake fluid circuit diagram of a braking system described in the following Japanese Patent Application Laid-Open No. 2000-6779. As shown in Fig. 10, the braking system 100 includes a first and a second braking force generating mechanisms 101 and 102. The second braking force generating mechanism 102 is connected to a master cylinder 104 through **a** brake fluid passage 103. A rear brake pedal 105 is attached to the master cylinder 104. If the rear brake pedal 105 is operated, brake fluid in the master cylinder 104 is pushed out. As a result, hydraulic pressure is supplied to the second braking force generating mechanism 102, and a braking force is generated. The rear brake pedal 105 is provided with a stroke sensor 106. The operation of the rear brake pedal 105 is detected by the stroke sensor 106.

The first braking force generating mechanism 101 is connected to a master cylinder 108 through **a** brake fluid passage 107. A front brake lever 109 is attached to the master cylinder 108.

A brake fluid passage 110 is connected to the brake fluid passage 107. The brake fluid passage 110 is provided with a brake fluid pump 111 constituting an ABS mechanism and an assist mechanism. The ABS mechanism and the assist mechanism include the brake fluid pump 111 and on-off valves 112 to 114.

In a state where the ABS mechanism and the assist mechanism do not function, the on-off valve 112 is opened and the on-off valves 113 and 114 are closed. Therefore, if the front brake lever 109 is operated, brake fluid in the master cylinder 108 is pushed out. As a result, hydraulic pressure is supplied to the first braking force generating mechanism 101, thereby generating a braking force.

In the braking system 100, when the operation of the rear brake pedal 105 is detected and a predetermined condition is satisfied, the assist mechanism is driven. As a result, hydraulic pressure is supplied to the first braking force generating mechanism 101, and a braking force is supplied also to the front wheel. More specifically, the on-off valve 112 and the on-off valve 114 are closed and the on-off valve 113 is opened. Thus, brake fluid in the master cylinder 108 is sucked by the brake fluid pump 111 through the on-off valve 113, and then is supplied to the first braking force generating mechanism 101. As a result, hydraulic pressure is supplied to the first braking force generating mechanism 101 and a braking force is supplied also to the front wheel.

When an abnormal condition is detected in a braking system, it is general to immediately shut down the system. In a braking system 100, however, if an abnormal condition is detected while an assist mechanism is driven and the system is immediately shut down, supply of hydraulic pressure to a first braking force generating mechanism 101 is immediately stopped. As a result, a braking force applied to a front wheel is abruptly reduced. Therefore, a rider may be bothered by a sense of incongruity.

Prior art document EP 1 277 635 A2 discloses a brake control method for a motorcycle which includes a front master cylinder, front wheel cylinders hydraulically connectable to the front master cylinder, a rear master cylinder, a rear wheel cylinder means hydraulically connectable to the rear master cylinder and a hydraulic pressure pump, wherein when only the front master cylinder is operated, brake pressure fluid is supplied to the front wheel cylinders, the fluid pressure pump is driven to supply discharging pressure fluid to the rear wheel cylinder means and, when only the rear master cylinder is operated, brake pressure fluid is supplied only to the rear wheel cylinder means.

Prior art document US2006/0082216 A1 relates to an integral brake for a motorbike. The integral brake is designed in such a way that if the footbrake lever or the handbrake lever is additionally activated after the footbrake lever or the handbrake lever is already activated, an optimum distribution-corresponding to the aimed-at increased deceleration of the motorbike-of the braking forces applied to the front and rear wheels is brought about without influencing the pressure prevailing in the handbrake cylinder.

Prior art document WO 2008/090783 A1 relates to a brake control device for a two-wheeled motor vehicle. Braking force in interlocked control between front and rear brakes is increased. A brake control device has a front wheel brake caliper having at least two front wheel cylinders, a rear wheel brake caliper having a rear wheel cylinder, a front wheel brake piping between a front wheel master cylinder and one of the front wheel cylinders, a rear wheel brake piping between a rear wheel master cylinder and the rear wheel cylinder, piping for boosting branched from a first position of the rear wheel brake piping and converging to the rear wheel brake piping at a second position downstream from the first position, piping for interlocked braking branched from a third position, located downstream from the first position, of the rear wheel brake piping and connected to the other of the front wheel cylinders, a first selection control valve; between the first position and third position of the rear wheel brake piping, a second selection control valve in the piping for boosting, a hydraulic pump in the piping for boosting, and a control device for controlling the opening and closing of the valves and operation of the hydraulic pump.

The present invention has been accomplished in view of the circumstances, and it is an object of the invention to provide a motorcycle braking system having an association mechanism, which does not give a sense of incongruity to a rider.

According to the present invention said object is solved by a braking system for a motorcycle having the features of independent claim 1. Preferred embodiments are laid down in the dependent claims.

### BRIEF DESCRIPTION OF THE DRAWINGS

Fig. 1 is a left side view of a motorcycle;
Fig. 2 is a schematic plan view of the motorcycle;
Fig. 3 is a schematic structure diagram showing a structure of a braking system;
Fig. 4 is a schematic structure diagram of the braking system when a brake lever is operated;
Fig. 5 is a schematic structure diagram of the braking system when a brake pedal is operated;
Fig. 6 is a schematic structure diagram of the braking system for explaining ABS action of a second braking force generating mechanism when the brake lever is being operated;
Fig. 7 is a schematic structure diagram of the braking system for explaining ABS action of a first and the second braking force generating mechanisms when the brake pedal is being operated;
Fig. 8 is a flowchart showing control when an abnormal condition is detected during front associationed operation;
Fig. 9 is a graph showing variation in opening of a first on-off valve when an abnormal condition is detected during the front associationed operation; and
Fig. 10 is **a** brake fluid circuit diagram of a braking system described in Japanese Patent Application Laid-Open No. 2000-6779.

### DESCRIPTION OF THE PREFERRED EMBODIMENT

One example of a preferred mode in which the present teaching is implemented will be described. However, the invention is not limited to the embodiment below.

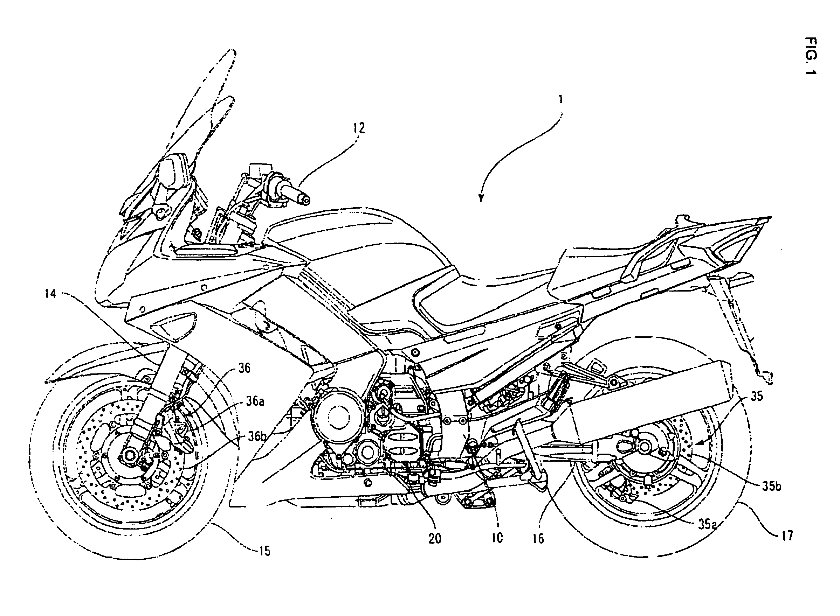

In this embodiment, one example of a preferred mode in which the present teaching is implemented will be described based on a motorcycle 1 in a narrow sense shown in Fig. 1.

In the present teaching, the motorcycle is not limited to the motorcycle in the narrow sense. The motorcycle refers to any vehicle on which a rider straddles. The motorcycle includes an ATV (All Terrain Vehicle), and a motorcycle in a broad sense. The motorcycle in the broad sense includes a moped, a motocrosser and a scooter in addition to the motorcycle in the narrow sense. The motorcycle in the broad sense includes a vehicle having two or more front wheels and/or two or more rear wheels.

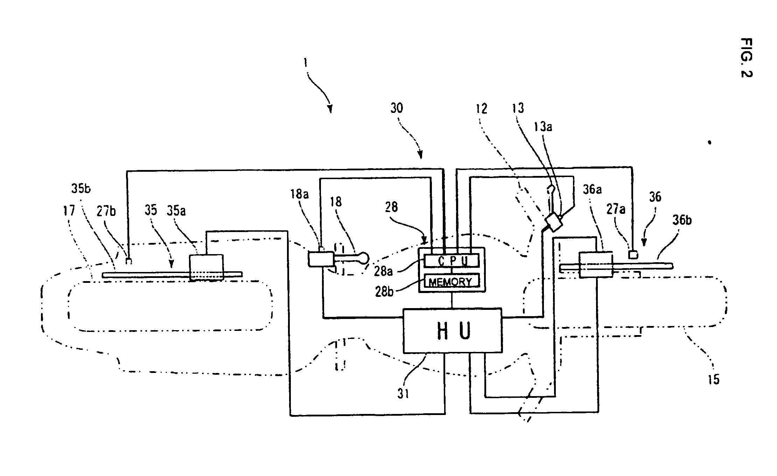

First, a schematic structure of the motorcycle 1 will be described with reference to Figs. 1 and 2. As shown in Fig. 1, the motorcycle 1 includes a body frame 10. A head pipe (not shown) is formed on a front end portion of the body frame 10. A steering shaft (not shown) is rotatably inserted into the head pipe. A pair of left and right front forks 14 are mounted on the steering shaft. A front wheel 15 is rotatably supported at lower end portions of the pair of left and right front forks 14. A steering handle bar 12 is mounted on the head pipe.

A pivot shaft (not shown) is mounted on a rear end portion of the body frame 10. A rear arm 16 is swingably mounted on the pivot shaft. A rear wheel 17 is rotatably supported by a rear end portion of the rear arm 16. The rear wheel 17 is driven by an engine 20 which is suspended by the body frame 10.

As shown in Fig. 2, the motorcycle 1 is provided with a braking system 30. The braking system 30 is for decelerating the motorcycle 1. The braking system 30 of the embodiment includes a front wheel-side braking mechanism which applies a brake to the front wheel 15, a rear wheel-side braking mechanism which applies a brake to the rear wheel 17, a front association mechanism, a rear association mechanism, and an ABS mechanism. The front association mechanism refers to a mechanism which drives the rear wheel-side braking mechanism when the front wheel-side braking mechanism is operated. The rear association mechanism refers to a mechanism which drives the front wheel-side braking mechanism when the rear wheel-side braking mechanism is operated. Most mechanisms of the braking system 30 are accommodated in a HU (Hydraulic Unit) 31.

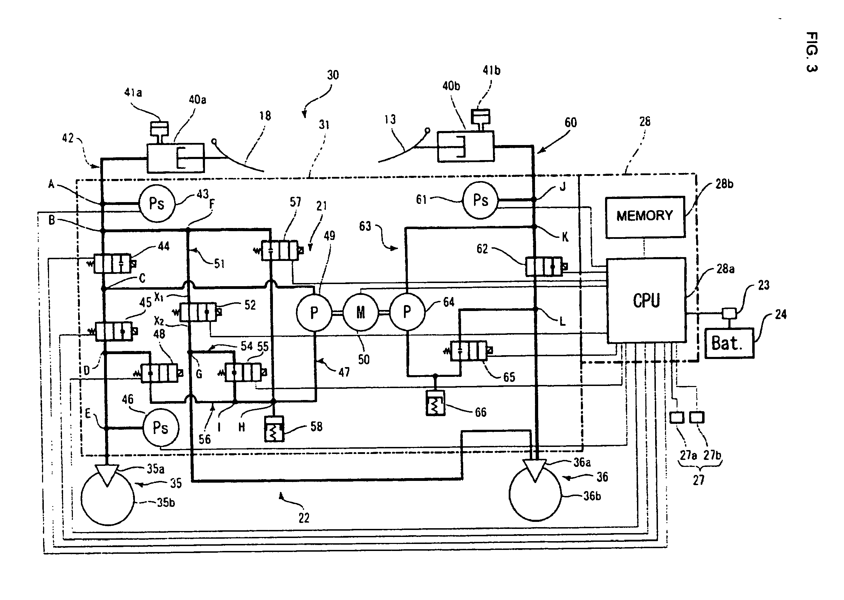

The structure of the braking system 30 will be described in detail with reference to Figs. 2 and 3. As shown in Fig. 3, the braking system 30 includes a first braking force generating mechanism 35 and a second braking force generating mechanism 36.

As shown in Fig. 2, the first braking force generating mechanism 35 is provided to the rear wheel 17. The first braking force generating mechanism 35 is supplied with hydraulic pressure, thereby generating a braking force for the rear wheel 17. More specifically, the first braking force generating mechanism 35 includes a first caliper 35a and a first brake disk 35b. The first brake disk 35b rotates together with the rear wheel 17.

The second braking force generating mechanism 36 is provided to the front wheel 15. The second braking force generating mechanism 36 is supplied with hydraulic pressure, thereby generating a braking force for the front wheel 15. The second braking force generating mechanism 36 includes a second caliper 36a and a second brake disk 36b. More specifically, the second brake disk 36b rotates together with the front wheel 15.

As shown in Fig. 3, the first braking force generating mechanism 35 is connected to a first master cylinder 40a through a first brake fluid passage 42. A reservoir tank 41a and a brake pedal 18 as a first operation member are connected to the first master cylinder 40a. If a rider operates the brake pedal 18, hydraulic pressure is supplied from the first master cylinder 40a to the first braking force generating mechanism 35. As shown in Fig. 2, the brake pedal 18 is provided with a stroke sensor 18a. An operation amount of the brake pedal 18 is detected also by the stroke sensor 18a. The detected operation amount of the brake pedal 18 is output to a CPU 28a.

A second hydraulic pressure sensor 43 as an operation amount detection section and a hydraulic pressure detection section is connected to a point A of the first brake fluid passage 42. The second hydraulic pressure sensor 43 detects hydraulic pressure at the point A of the first brake fluid passage 42. With this, an operation amount of the brake pedal 18 as the first operation member is detected. A sensor which detects the operation amount of the brake pedal 18 may be provided separately from the second hydraulic pressure sensor 43. For example, the brake pedal 18 may be provided with a position sensor or a stroke sensor.

A first on-off valve 44 as the second association mechanism on-off valve and a third on-off valve 45 are disposed in the first brake fluid passage 42. The first on-off valve 44 is disposed between a point B and a point C of the first brake fluid passage 42. The first on-off valve 44 is an open-when-nonenergized type on-off valve which opens when electric power is not supplied, and which closes when electric power is supplied. The third on-off valve 45 is disposed between the point C and a point D of the first brake fluid passage 42. The third on-off valve 45 is also an open-when-nonenergized type on-off valve like the first on-off valve 44.

In this embodiment, the first on-off valve 44, the third brake fluid passage 47 as the second association mechanism brake fluid passage, the first brake fluid pump 49 and the second on-off valve 57 as the third association mechanism on-off valve constitute the front association mechanism 21 as the second association mechanism.

A third hydraulic pressure sensor 46 is connected to a point E of the first brake fluid passage 42. The third hydraulic pressure sensor 46 has a higher hydraulic pressure detection accuracy than the second hydraulic pressure sensor 43. However, the second hydraulic pressure sensor 43 is more excellent in terms of the resistance to pressure than the third hydraulic pressure sensor 46.

Here, the point B of the first brake fluid passage 42 closer to the first master cylinder 40a and the point C closer to the first braking force generating mechanism 35 than a portion of the first brake fluid passage 42 where the first on-off valve 44 is disposed are connected to each other through a third brake fluid passage 47. The third brake fluid passage 47 extends from the point B to the point C through a point F and a point H.

A (first) brake fluid pump 49 is disposed in the third brake fluid passage 47. The brake fluid pump 49 is connected to a motor 50. The brake fluid pump 49 is activated when the motor 50 is driven by a later-described ECU 28. If the brake fluid pump 49 is activated, pressure on the side of the point B becomes low pressure and the pressure on the side of the point C becomes high pressure.

A second on-off valve 57 is disposed in the third brake fluid passage 47. More specifically, the second on-off valve 57 is disposed closer to the point B than the brake fluid pump 49 of the third brake fluid passage 47. The second on-off valve 57 is a closed-when-nonenergized type on-off valve which closes when electric power is not supplied and which opens when electric power is supplied.

Further, a buffer chamber 58 is connected to the point H of the third brake fluid passage 47.

The point F, which is located closer to the point B than the second on-off valve 57, is connected to the second caliper 36a through a fourth brake fluid passage 51 as the first association mechanism brake fluid passage. A fifth on-off valve 52 as the first association mechanism on-off valve is disposed between the point F and a point G of the fourth brake fluid passage 51. The fifth on-off valve 52 is an open-when-nonenergized type on-off valve. In this embodiment, the fifth on-off valve 52 and the fourth brake fluid passage 51 constitute the rear association mechanism 22 as the first association mechanism.

The point D of the first brake fluid passage 42 and the point H of the third brake fluid passage 47 are connected to each other through a fifth brake fluid passage 56. A fourth on-off valve 48 is disposed in the fifth brake fluid passage 56. The fourth on-off valve 48 is a closed-when-nonenergized type on-off valve.

The point G of the fourth brake fluid passage 51 and a point I of the fifth brake fluid passage 56 are connected to each other through a sixth brake fluid passage 54. A sixth on-off valve 55 is disposed in the sixth brake fluid passage 54. The sixth on-off valve 55 is a closed-when-nonenergized type on-off valve.

The second braking force generating mechanism 36 is connected to a second master cylinder 40b through a second brake fluid passage 60. A reservoir tank 41b and a brake lever 13 as a second operation member are connected to the second master cylinder 40b. If a rider operates the brake lever 13, hydraulic pressure is supplied from the second master cylinder 40b to the second braking force generating mechanism 36. As shown in Fig. 2, a stroke sensor 13a is provided to the brake lever 13. The operation amount of the brake lever 13 is detected also by the stroke sensor 13a. The detected operation amount of the brake lever 13 is output to the CPU 28a.

A first hydraulic pressure sensor 61 is connected to a point J of the second brake fluid passage 60. The first hydraulic pressure sensor 61 detects hydraulic pressure at the point J of the second brake fluid passage 60. With this, the operation amount of the brake lever 13 as the second operation member is indirectly detected.

A sensor which directly detects the operation amount of the brake lever 13 may be disposed instead of the first hydraulic pressure sensor 61, or together with the first hydraulic pressure sensor 61. An example of the sensor which directly detects the operation amount of the brake lever 13 includes a position sensor which detects a position of the brake lever 13.

A seventh on-off valve 62 is disposed in a portion closer to the second braking force generating mechanism 36 than the point J of the second brake fluid passage 60. The seventh on-off valve 62 is an open-when-nonenergized type on-off valve.

A point K of the second brake fluid passage 60 closer to the second master cylinder 40b and a point L of the second brake fluid passage 60 closer to the second braking force generating mechanism 36 than the seventh on-off valve 62 are connected to each other through a seventh brake fluid passage 63.

A second brake fluid pump 64 is disposed in the seventh brake fluid passage 63. The second brake fluid pump 64 is driven by the motor 50 mentioned above. If the second brake fluid pump 64 is driven, the pressure on the side of the point L becomes low pressure and the pressure on the side of the point K becomes high pressure.

In this embodiment, in a state where a power source of the motorcycle 1 is ON, the motor 50 is always driven, and the first and the second brake fluid pumps 49 and 64 are always activated.

An eighth on-off valve 65 is disposed between the second brake fluid pump 64 and the point L. The eighth on-off valve 65 is a closed-when-nonenergized type on-off valve. A buffer chamber 66 is connected to a connection point between the eighth on-off valve 65 and the second brake fluid pump 64.

As shown in Fig. 3, the ECU (Electronic Control Unit) 28 as a control unit is disposed adjacent to the HU 31. In this embodiment, the ECU 28 is used only for controlling the HU 31. An ECU (not shown) used for controlling the engine 20 shown in Fig. 1 is provided independently from the ECU 28. However, the present teaching is not limited to this configuration. For example, one ECU 28 may control both the engine 20 and the HU 31.

The ECU 28 includes the CPU 28a as a calculating section and a memory 28b as a storing section connected to the CPU 28a. Various settings are stored in the memory 28b as will be described in detail later. Various detection values are also stored in the memory 28b.

The CPU 28a is connected to the on-off valves, the hydraulic pressure sensors and the motor 50 which are included in the HU 31. The on-off valves and the motor 50 included in the HU 31 are controlled by the CPU 28a. Hydraulic pressures detected by the hydraulic pressure sensors 43, 46 and 61 are sent to the CPU 28a.

A front wheel rotation speed sensor 27a and a rear wheel rotation speed sensor 27b are connected to the CPU 28a. A rotation speed of the front wheel 15 is detected by the front wheel rotation speed sensor 27a and is output to the CPU 28a. A rotation speed of the rear wheel 17 is detected by the rear wheel rotation speed sensor 27b and is output to the CPU 28a.

In this embodiment, the CPU 28a calculates a vehicle speed which is a speed of the motorcycle 1 based on output from the front wheel rotation speed sensor 27a and the rear wheel rotation speed sensor 27b. That is, in this embodiment, the front wheel rotation speed sensor 27a and the rear wheel rotation speed sensor 27b constitute a vehicle speed sensor 27 as the vehicle speed detection section.

A method for calculating a vehicle speed from the front wheel rotation speed and the rear wheel rotation speed is not especially limited. For example, an average value of the front wheel rotation speed and the rear wheel rotation speed may be defined as the vehicle speed.

A battery 24 as the power source is connected to the CPU 28a. A relay 23 is connected between the CPU 28a and the battery 24.

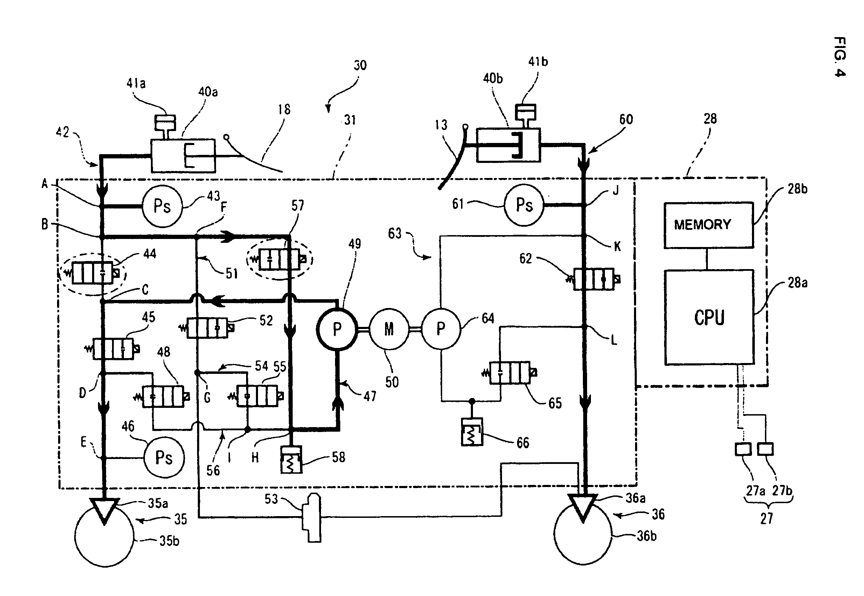

Next, basic control action of the braking system 30 will be described with reference to Figs. 4 to 7. In Figs. 4 to 7, on-off valves which are surrounded by phantom lines are energized on-off valves. On the other hand, on-off valves which are not surrounded by the phantom lines are nonenergized on-off valves.

Fig. 4 is a schematic structure diagram of the braking system when the brake lever 13 is operated. As shown in Fig. 4, if a rider operates the brake lever 13, hydraulic pressure is supplied from the second master cylinder 40b. Here, the seventh on-off valve 62 is the open-when-nonenergized type on-off valve. Therefore, hydraulic pressure from the second master cylinder 40b is supplied to the second caliper 36a through the second brake fluid passage 60. With this, a braking force is generated in the second braking force generating mechanism 36 which is provided to the front wheel 15.

If the brake lever 13 is operated, the increase of hydraulic pressure in the second brake fluid passage 60 is detected by the first hydraulic pressure sensor 61, and this fact is output to the ECU 28. The ECU 28 determines whether or not the brake lever 13 is operated based on hydraulic pressure in the second brake fluid passage 60.

If the ECU 28 determines that the brake lever 13 is operated, the ECU 28 closes the first on-off valve 44 and opens the second on-off valve 57. As a result, brake fluid in the first master cylinder 40a is sucked by the first brake fluid pump 49, and brake fluid is supplied to the first caliper 35a through the third brake fluid passage 47 and the first brake fluid passage 42. With this, a braking force is generated in the first braking force generating mechanism 35 which is provided to the rear wheel 17.

In the braking system 30, if the brake lever 13 is operated, a braking force is generated in the second braking force generating mechanism 36 and a braking force is generated also in the first braking force generating mechanism 35.

This associationed operation is realized through the ECU 28. For this reason, this front associationed operation is called an electrically associationed operation.

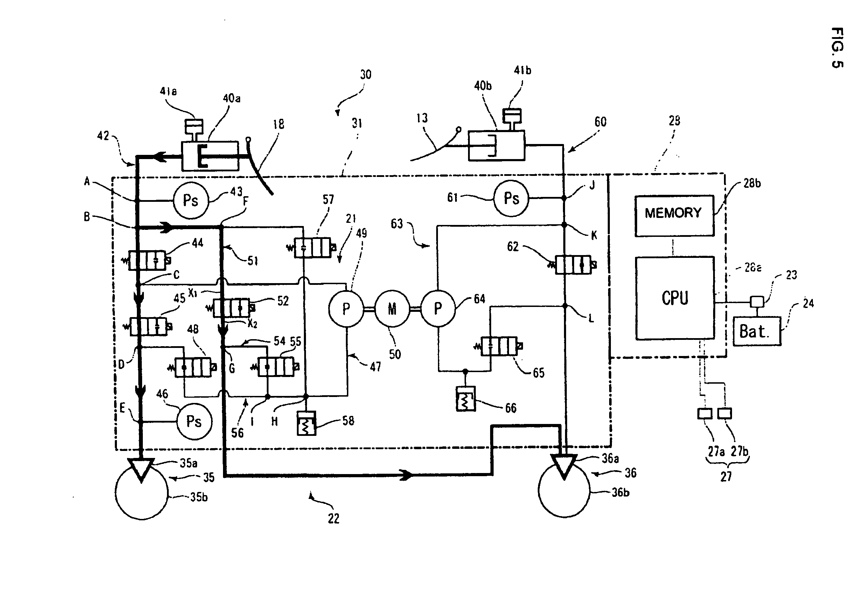

Fig. 5 is a schematic structure diagram of the braking system when the brake pedal 18 is operated. As shown in Fig. 5, if the brake pedal 18 is operated, brake fluid is discharged from the first master cylinder 40a. Here, the first on-off valve 44 and the third on-off valve 45 are open-when-nonenergized type on-off valves. Therefore, brake fluid discharged from the first master cylinder 40a is supplied to the first caliper 35a through the first brake fluid passage 42. With this, a braking force is generated in the first braking force generating mechanism 35 which is provided to the rear wheel 17.

The fifth on-off valve 52 is also the open-when-nonenergized type on-off valve. Therefore, brake fluid discharged from the first master cylinder 40a is supplied also to the second caliper 36a through the fourth brake fluid passage 51. With this, a braking force is generated in the second braking force generating mechanism 36 which is provided to the front wheel 15.

Thus in the braking system 30, if the brake pedal 18 is operated, a braking force is generated not only in the first braking force generating mechanism 35 but also in the second braking force generating mechanism 36.

This associationed operation is different from the associationed operation caused when the brake lever 13 is operated and is mechanically performed without using the ECU 28. Thus, this rear associationed operation is called a mechanically associationed operation.

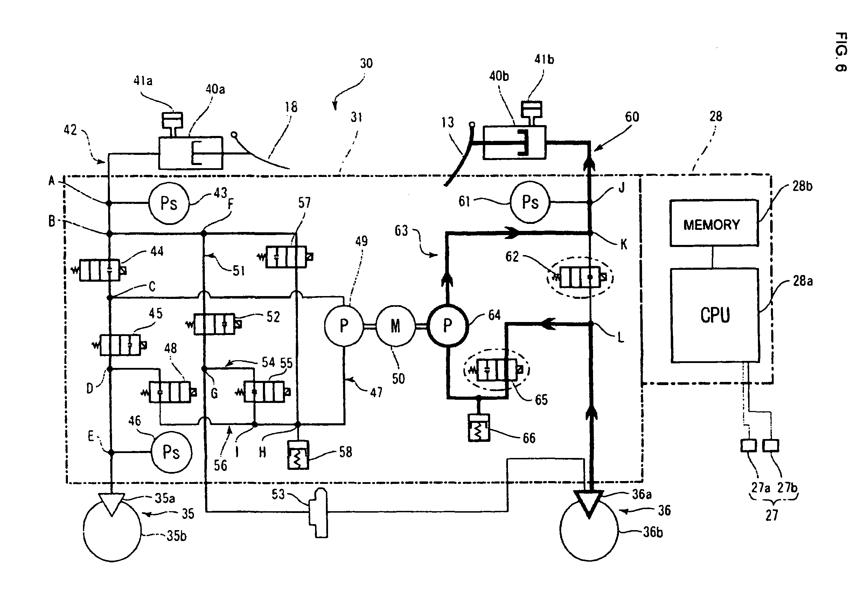

Fig. 6 is a schematic structure diagram of the braking system for describing the ABS action of the second braking force generating mechanism 36 when the brake lever 13 is operated.

The ECU 28 detects a locked state of the front wheel 15 based on output from the front wheel rotation speed sensor 27a and output from the rear wheel rotation speed sensor 27b. More specifically, the ECU 28 detects the locked state of the front wheel 15 when the magnitude of the front wheel rotation speed is largely reduced with respect to the vehicle speed.

If the ECU 28 detects the locked state of the front wheel 15, the ECU 28 supplies current to the seventh and the eighth on-off valves 62 and 65. With this, the seventh on-off valve 62 is closed and the eighth on-off valve 65 is opened. Therefore, brake fluid is sent from the second caliper 36a to the second master cylinder 40b through the seventh brake fluid passage 63. As a result, a braking force generated in the second braking force generating mechanism 36 is reduced.

If the ECU 28 detects that the locked state of the front wheel 15 is released, the ECU 28 stops the current supply to the seventh and the eighth on-off valves 62 and 65. With this, the seventh on-off valve 62 is opened and the eighth on-off valve 65 is closed. As a result, a braking force generated in the second braking force generating mechanism 36 is again increased.

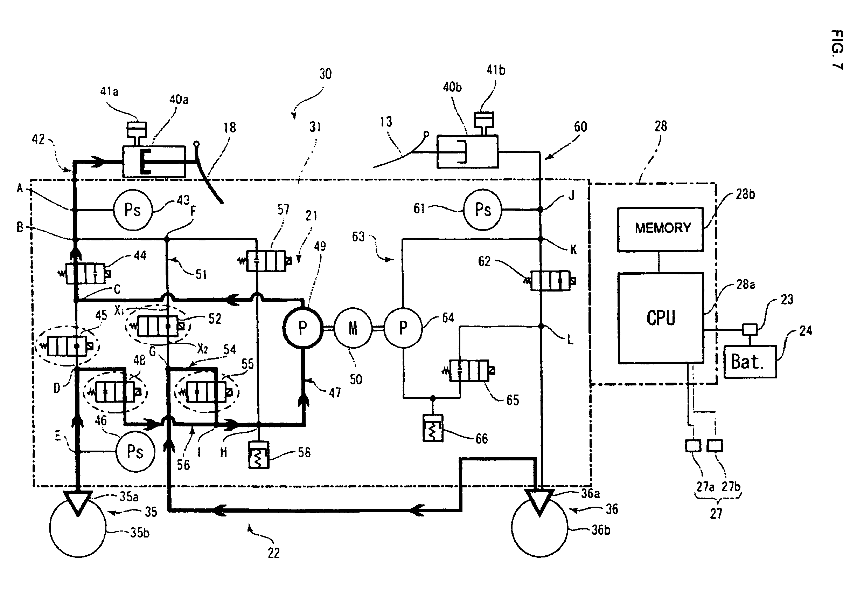

Fig. 7 is a schematic structure diagram of the braking system for describing the ABS action of the first and the second braking force generating mechanisms 35 and 36 when the brake pedal 18 is operated.

The ECU 28 detects the locked state of the rear wheel 17 based on output from the front wheel rotation speed sensor 27a and output from the rear wheel rotation speed sensor 27b. More specifically, the ECU 28 detects the locked state of the rear wheel 17 when the level of the rear wheel rotation speed is largely reduced with respect to the vehicle speed.

If the ECU 28 detects the locked state of the rear wheel 17, the ECU 28 supplies current to the third on-off valve 45 and the fourth on-off valve 48. With this, the third on-off valve 45 is closed and the fourth on-off valve 48 is opened. Therefore, brake fluid in the first caliper 35a is sent to the first master cylinder 40a through the third brake fluid passage 47. As a result, a braking force generated in the first braking force generating mechanism 35 is reduced.

If the ECU 28 detects that the locked state of the rear wheel 17 is released, the ECU 28 stops the current supply to the third and the fourth on-off valves 45 and 48. With this, the third on-off valve 45 is opened and the fourth on-off valve 48 is closed. As a result, a braking force generated in the first braking force generating mechanism 35 is again increased.

These ABS actions are the same also during the front associationed operation in which the brake lever 13 is being operated.

If the ECU 28 detects the locked state of the front wheel 15, the ECU 28 supplies current to the fifth on-off valve 52 and the sixth on-off valve 55 as shown in Fig. 7. With this, the fifth on-off valve 52 is closed and the sixth on-off valve 55 is opened. Thus, brake fluid in the second caliper 36a is sent to the second master cylinder 40b through the sixth brake fluid passage 54. As a result, a braking force generated in the second braking force generating mechanism 36 is reduced.

If the ECU 28 detects that the locked state of the front wheel 15 is released, the ECU 28 stops the current supply to the fifth and the sixth on-off valves 52 and 55. With this, the fifth on-off valve 52 is opened and the sixth on-off valve 55 is closed. As a result, a braking force generated in the second braking force generating mechanism 36 is again increased.

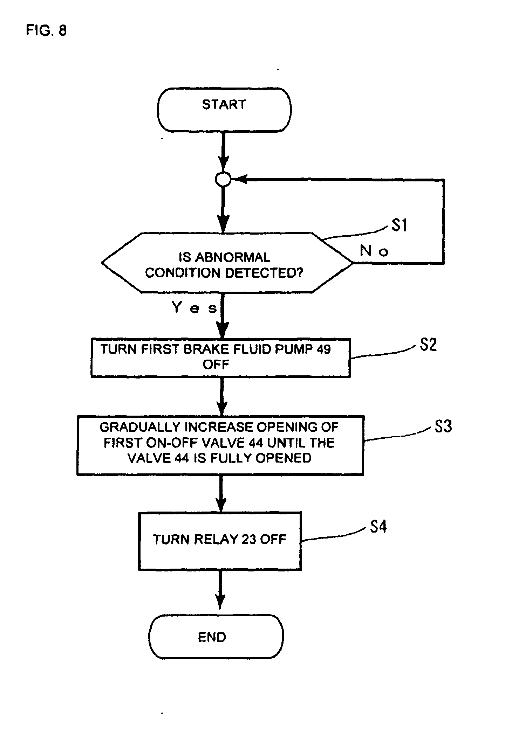

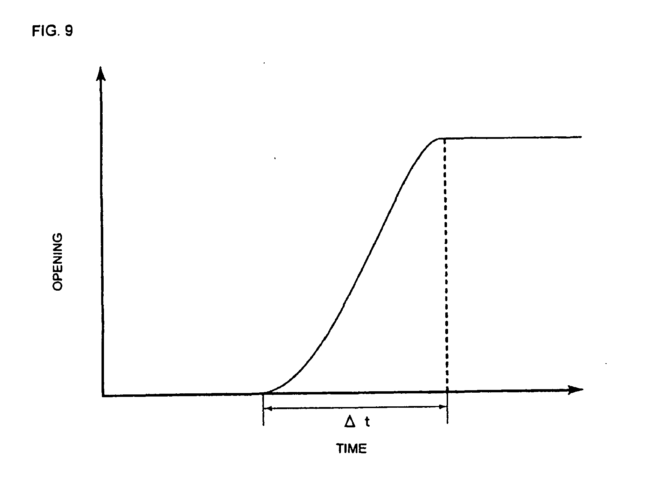

Next, control when an abnormal condition is detected during the front associationed operation will be described mainly with reference to Figs. 8 and 9. As shown in Fig. 8, in step S1, an abnormal condition of the braking system 30 is detected by the ECU 28. The abnormal condition of the braking system 30 includes abnormal conditions of the hydraulic pressure sensors 61, 43 and 46, an abnormal condition of a circuit such as a break in the ECU 28, abnormality in voltage supplied from the battery 24, an abnormal condition of the relay 23, and abnormal conditions of the front wheel rotation speed sensor 27a and the rear wheel rotation speed sensor 27b.

When no abnormal condition of the braking system 30 is detected in step S1, the procedure is returned to step S1. If an abnormal condition of the braking system 30 **is** detected in step S1, the procedure is advanced to step S2 and step S3.

In step S2, the ECU 28 stops the first brake fluid pump 49. In step S3, as shown in Fig. 9, the ECU 28 gradually increases the opening of the first on-off valve 44 from the current opening to its full opening. Hydraulic pressure supplied by the front association mechanism 21 to the first braking force generating mechanism 35 is gradually reduced toward zero. As a result, a braking force given to the rear wheel 17 by the first braking force generating mechanism 35 is gradually reduced.

Therefore, even when an abnormal condition occurs in the braking system 30 during the front associationed operation, it is possible to prevent a braking force of the braking system 30 from being abruptly reduced. Thus, a rider is less prone to be bothered by a sense of incongruity.

Time (Δt) elapsed until the opening of the first on-off valve 44 is fully opened can appropriately be set in accordance with required characteristics of the motorcycle 1, current vehicle speed of the motorcycle 1, the operation amount of the brake lever 13 and the like. For example, time (Δt) elapsed until the opening of the first on-off valve 44 is fully opened can be 0.1 to 3 seconds, preferably 0.5 to 1.5 seconds, and for example, 1 second.

After the first on-off valve 44 is fully opened in step S3, step S4 is executed. In step S4, the ECU 28 turns the relay 23 off. With this, supply of electric power from the battery 24 to the ECU 28 is stopped.

## Claims

1. A braking system for a motorcycle, including:
a first braking force generating mechanism (35) which generates a braking force when hydraulic pressure is supplied;
a first hydraulic pressure supply mechanism which supplies hydraulic pressure to the first braking force generating mechanism (35);
a first operation member (18) for operating the first hydraulic pressure supply mechanism;
a second braking force generating mechanism (36) which generates a braking force when hydraulic pressure is supplied;
a second hydraulic pressure supply mechanism which supplies hydraulic pressure to the second braking force generating mechanism (36);
a second operation member (13) for operating the second hydraulic pressure supply mechanism;
a second association mechanism (21) which supplies hydraulic pressure to the first braking force generating mechanism (35) when the second operation member (13) is operated, and
a control unit (28) which controls the second association mechanism (21) to detect an abnormal condition of the braking system, **characterized in that** when the control unit (28) detects the abnormal condition of the braking system in a state where the second association mechanism (21) is driven, the control unit (28) causes the second association mechanism (21) to gradually reduce hydraulic pressure supplied to the first braking force generating mechanism (35) substantially toward zero.

2. A braking system for a motorcycle according to claim 1, **characterized by** a first association mechanism (22) which supplies hydraulic pressure to the second braking force generating mechanism (36) when the first operation member (18) is operated.

3. A braking system for a motorcycle according to claim 1 or 2, **characterized by** the first hydraulic pressure supply mechanism being a master cylinder (40a) which is operated by the first operation member (18) and which supplies hydraulic pressure to the first braking force generating mechanism (35); and
a first brake fluid passage (42) which connects the master cylinder (40a) and the first braking force generating mechanism (35) with each other, wherein the second association mechanism (21) includes:
a second association mechanism on-off valve (44) which is disposed in the first brake fluid passage (42) to open and close the first brake fluid passage (42);
a second association mechanism brake fluid passage (47) having one end thereof connected to a portion of the first brake fluid passage (42) closer to the master cylinder (40a) and the other end thereof connected to a portion of the first brake fluid passage (42) closer to the first braking force generating mechanism (35) than the second association mechanism on-off valve (44);
a brake fluid pump (49) which is disposed in the second association mechanism brake fluid passage (47) to send brake fluid from the first hydraulic pressure supply mechanism toward the first braking force generating mechanism (35); and a third association mechanism on-off valve (57) which is disposed in the second association mechanism brake fluid passage (47) to open and close the second association mechanism brake fluid passage (47), and
when the control unit (28) detects the abnormal condition of the braking system in a state where the second association mechanism (21) is driven, the control unit (28) stops the brake fluid pump (49) and gradually increases an opening of the second association mechanism on-off valve (44) so that the second association mechanism (21) gradually reduces hydraulic pressure supplied to the first braking force generating mechanism (35) substantially toward zero.

4. A braking system for a motorcycle according to any one of claims 1 to 3, **characterized by** a power source (24) which supplies electric power to the control unit (28), and a relay (23) connected between the power source (24) and the control unit (28), wherein when the control unit (28) detects the abnormal condition of the braking system in a state where the second association mechanism (21) is driven, the control unit (28) stops supply of electric power to the control unit (28) by turning the relay (23) off after the second association mechanism (21) gradually reduces hydraulic pressure supplied to the first braking force generating mechanism (35) substantially toward zero.

## Patentansprüche

1. Bremssystem für ein Motorrad, enthaltend:
eine erste Bremskraft- Erzeugungsvorrichtung (35), die eine Bremskraft erzeugt, wenn ein hydraulischer Druck zugeführt wird;
eine erste Hydraulikdruck- Zuführungsvorrichtung, die hydraulischen Druck zu der ersten Bremskraft- Erzeugungsvorrichtung (35) zuführt;
ein erstes Betätigungsteil (18) zum Betätigen der ersten Hydraulikdruck- Zuführungsvorrichtung;
eine zweite Bremskraft- Erzeugungsvorrichtung (36), die eine Bremskraft erzeugt, wenn ein hydraulischer Druck zugeführt wird;
eine zweite Hydraulikdruck- Zuführungsvorrichtung, die hydraulischen Druck zu der zweiten Bremskraft- Erzeugungsvorrichtung (36) zuführt;
ein zweites Betätigungsteil (13) zum Betätigen der zweiten Hydraulikdruck- Zuführungsvorrichtung;
eine zweite Verbindungsvorrichtung (21), die hydraulischen Druck zu der ersten Bremskraft- Erzeugungsvorrichtung (35) zuführt, wenn das zweite Betätigungsteil (13) betätigt wird, und
eine Steuerungseinheit (28), die die zweite Verbindungsvorrichtung (21) steuert, um einen abnormalen Zustand des Bremssystems zu erfassen, **dadurch gekennzeichnet, dass** dann wenn die Steuerungseinheit (28) den abnormalen Zustand des Bremssystems in einem Zustand erfasst, in dem die zweite Verbindungsvorrichtung (21) angetrieben wird, die Steuerungseinheit (28) die zweite Verbindungsvorrichtung (21) veranlasst, den hydraulischen Druck, zugeführt zu der ersten Bremskraft- Erzeugungsvorrichtung (35), im Wesentlichen allmählich in Richtung auf Null zu reduzieren.

2. Bremssystem für ein Motorrad nach Anspruch 1, **gekennzeichnet durch** eine erste Verbindungsvorrichtung (21), die hydraulischen Druck zu der zweiten Bremskraft- Erzeugungsvorrichtung (36) zuführt, wenn das erste Betätigungsteil (18) betätigt wird.

3. Bremssystem für ein Motorrad nach Anspruch 1 oder 2, **gekennzeichnet dadurch, dass** die erste Hydraulikdruck- Zuführungsvorrichtung, ein Hauptzylinder (40a) ist, die durch das erste Betätigungsteil (18) betätigt wird und der Hydraulikdruck zu der ersten Bremskraft- Erzeugungsvorrichtung (35) zuführt; und
einen ersten Bremsfluidkanal (42), der den Hauptzylinder (40a) und die erste Bremskraft- Erzeugungsvorrichtung (35) miteinander verbindet, wobei die zweite Verbindungsvorrichtung (21) enthält:
ein zweites Verbindungsvorrichtungs- Ein- Aus- Ventil (44), das in dem ersten Bremsfluidkanal (42) angeordnet ist, um den ersten Bremsfluidkanal (42) zu öffnen oder zu schließen;
einen zweiten Verbindungsvorrichtungs- Bremsfluidkanal (47), mit einem Ende desselben mit einem Abschnitt des ersten Bremsfluidkanals (42) näher zu dem Hauptzylinder (40a) und das andere Ende desselben mit einem Abschnitt des ersten Bremsfluidkanals (42) näher zu der ersten Bremskraft- Erzeugungsvorrichtung (35) als das zweite Verbindungsvorrichtungs- Ein- Aus- Ventil (44) verbunden;
eine Bremsfluidpumpe (49), die in dem zweiten Verbindungsvorrichtungs-Bremsfluidkanal (47) angeordnet ist, um Fluid von der ersten Hydraulikdruck- Zuführungsvorrichtung in Richtung zu der ersten Bremskraft- Erzeugungsvorrichtung (35) zu senden; und ein drittes Verbindungsvorrichtungs- Ein- Aus- Ventil (57), das in dem zweiten Verbindungsvorrichtungs- Bremsfluidkanal (47) angeordnet ist, um den zweiten Verbindungsvorrichtungs- Bremsfluidkanal (47) zu öffnen oder zu schließen, und
wenn die Steuerungseinheit (28) den abnormalen Zustand des Bremssystems in einem Zustand erfasst, wo die zweite Verbindungsvorrichtung (21) angetrieben wird, die Steuerungseinheit (28) die Bremsfluidpumpe (49) stoppt und eine Öffnung des zweiten Verbindungsvorrichtungs- Ein- Aus- Ventils (44) allmählich vergrößert, so dass die zweite Verbindungsvorrichtung (21) den hydraulischen Druck, zugeführt zu der ersten Bremskraft- Erzeugungsvorrichtung (35) allmählich im Wesentlichen in Richtung zu Null reduziert.

4. Bremssystem für ein Motorrad nach einem der Ansprüche 1 bis 3, **gekennzeichnet durch** eine Energiequelle, die elektrische Energie zu der Steuerungseinheit (28) zuführt und ein Relais (23), verbunden zwischen der Energiequelle (24) und der Steuerungseinheit (28), wobei dann, wenn die Steuerungseinheit (28) den abnormalen Zustand des Bremssystems in einem Zustand erfasst, wo die zweite Verbindungsvorrichtung (21) angetrieben wird, die Steuerungseinheit (28) die Zuführung von elektrischer Energie stoppt, um die Steuerungseinheit (28) **durch** Drehen des Relais (23) auf Aus zu steuern, nachdem die zweite Verbindungsvorrichtung (21) den hydraulischen Druck, zugeführt zu der ersten Bremskraft- Erzeugungsvorrichtung (35), allmählich im Wesentlichen in Richtung zu Null reduziert.

## Revendications

1. Système de freinage pour motocyclette comprenant :
un premier mécanisme générateur de force de freinage (35) qui génère une force de freinage lorsqu'une pression hydraulique est fournie ;
un premier mécanisme de fourniture de pression hydraulique qui fournit une pression hydraulique au premier mécanisme générateur de force de freinage (35) ;
un premier élément fonctionnel (18) pour actionner le premier mécanisme de fourniture de pression hydraulique ;
un second mécanisme générateur de force de freinage (36) qui génère une force de freinage lorsqu'une pression hydraulique est fournie ;
un second mécanisme de fourniture de pression hydraulique qui fournit une pression hydraulique au second mécanisme générateur de force de freinage (36) ;
un second élément fonctionnel (13) pour actionner le second mécanisme de fourniture de pression hydraulique ;
un second mécanisme d'association (21) qui fournit une pression hydraulique au premier mécanisme générateur de force de freinage (35) lorsque le second élément fonctionnel (13) est actionné, et
une unité de commande (28) qui commande le second mécanisme d'association (21) pour détecter un état anormal du système de freinage, **caractérisé en ce que**, lorsque l'unité de commande (28) détecte l'état anormal du système de freinage dans un état ou le second mécanisme d'association (21) est commandé, l'unité de commande (28) fait diminuer par le second mécanisme d'association (21) la pression hydraulique fournie au premier mécanisme générateur de force de freinage (35), sensiblement vers zéro.

2. Système de freinage pour motocyclette selon la revendication 1, **caractérisé par** un premier mécanisme d'association (22) qui fournit une pression hydraulique au second mécanisme générateur de force de freinage (36) lorsque le premier élément fonctionnel (18) est actionné.

3. Système de freinage pour motocyclette selon la revendication 1 ou 2, **caractérisé en ce que** le premier mécanisme de fourniture de pression hydraulique est un maître cylindre (40a) qui est actionné par le premier élément fonctionnel (18) et qui fournit une pression hydraulique au premier mécanisme générateur de force de freinage (35) ; et
un premier passage de liquide de frein (42) qui relie l'un à l'autre le maître cylindre (40a) et le premier mécanisme générateur de force de freinage (35), dans lequel le second mécanisme d'association (21) comporté :
une deuxième vanne tout ou rien de mécanisme d'association (44) qui est disposée dans le premier passage de liquide de frein (42) pour ouvrir et fermer le premier passage de liquide de frein (42) ;
un second passage de liquide de frein de mécanisme d'association (47) dont une extrémité est reliée à une partie du premier passage de liquide de frein (42) plus proche du maître cylindre (40a) et l'autre extrémité est reliée à une partie du premier passage de liquide de frein (42) plus proche du premier mécanisme générateur de force de freinage (35) que la deuxième vanne tout ou rien de mécanisme d'association (44) ;
une pompe de liquide de frein (49) qui est disposée dans le second passage de liquide de frein de mécanisme d'association (47) pour envoyer un liquide de frein depuis le premier mécanisme de fourniture de pression hydraulique vers le premier mécanisme générateur de force de freinage (35) ; et
une troisième vanne tout ou rien de mécanisme d'association (57) qui est disposée dans le second passage de liquide de frein de mécanisme d'association (47) pour ouvrir et fermer le second passage de liquide de frein de mécanisme d'association (47), et
lorsque l'unité de commande (28) détecte l'état anormal du système de freinage dans un état ou le second mécanisme d'association (21) est commandé, l'unité de commande (28) arrête la pompe de liquide de frein (49) et augmente progressivement une ouverture de la deuxième vanne tout ou rien de mécanisme d'association (44) de telle sorte que le second mécanisme d'association (21) diminue progressivement la pression hydraulique fournie au premier mécanisme générateur de force de freinage (35) sensiblement vers zéro.

4. Système de freinage pour motocyclette selon l'une quelconque des revendications 1 à 3, **caractérisé par** une source d'alimentation (24) qui fournit de l'énergie électrique à l'unité de commande (28) et un relais (23) connecté entre la source d'alimentation (24) et l'unité de commande (28), dans lequel, lorsque l'unité de commande (28) détecte l'état anormal du système de freinage dans un état ou le second mécanisme d'association (21) est commandé, l'unité de commande (28) arrête de fournir de l'énergie électrique à l'unité de commande (28) en coupant le relais (23) après que le second mécanisme d'association (21) a progressivement diminué la pression hydraulique fournie au premier mécanisme générateur de force de freinage (35) sensiblement vers zéro.
